# EUROPÄISCHE PATENTSCHRIFT

(11) **EP 2 652 318 B1**
(45) Veröffentlichungstag und Bekanntmachung des Hinweises auf die Patenterteilung: **06.04.2016**
(21) Anmeldenummer: 11804640.8
(22) Anmeldetag: 03.12.2011
(51) Int. Cl.: F03D 3/00, F03D 3/06, H02K 7/18

(54) **ZWILLINGSTURBINENSYSTEM, DAS DEM WIND/WASSER FOLGT (WINDTRACKER), FÜR WIND- UND/ODER WASSERKRAFT**
TWIN TURBINE SYSTEM WHICH FOLLOWS THE WIND/WATER (WINDTRACKER), FOR WIND AND/OR WATER POWER
SYSTÈME DE TURBINES JUMELLES QUI SUIT LE VENT/L'EAU (WINDTRACKER) POUR LA GÉNÉRATION D'ÉNERGIE ÉOLIENNE ET/OU HYDRAULIQUE

(30) Priorität: 13.12.2010 DE 102010054365; 02.02.2011 DE 102011010177; 03.08.2011 DE 102011109217
(43) Veröffentlichungstag der Anmeldung: 23.10.2013
(73) Patentinhaber: Steel, Dennis Patrick, 47441 Moers (DE)
(72) Erfinder: Steel, Dennis Patrick, 47441 Moers (DE)
(74) Vertreter: Schoenen, Norbert
(86) Internationale Anmeldenummer: PCT/EP2011/006062
(87) Internationale Veröffentlichungsnummer: WO 2012/079711

(56) Entgegenhaltungen:
- US-A- 4 037 983
- US-A- 4 156 580
- US-A- 4 764 683
- US-A1- 2004 141 845
- US-A1- 2008 085 179

## Beschreibung

Die Erfindung betrifft eine Windkraftanlage mit zwei Radialturbinen nach dem Oberbegriff des Anspruchs 1.

### Stand der Technik

Eine Radialturbine hat gegenüber den bekannten dreiflügeligen Windkraftanlagen mit horizontaler Drehachse und Flugzeugflügeln den großen Vorteil, unabhängig von der Richtung des einfallenden Windes zu arbeiten. Die Radialturbine mit einer vertikalen Rotationsachse muss also nicht in den Wind gedreht werden.
In einer besonders wirtschaftlichen Ausführungsform ist die Radialturbine mit Leitblechen versehen, die die Windenergie sammeln und konzentriert auf die Schaufeln der Radialturbine leiten. Nachteilig ist hier jedoch, dass infolge des Leitbleches die Unabhängigkeit von der Windrichtung nicht mehr gegeben ist. Auch die Radialturbine mit Leitblech muss daher dem Wind nachgerührt werden.
Bekannt ist eine Anordnung nach der internationalen Patentanmeldung WO 2011/059760 A2 (Priorität 29.10.2009), die allerdings nicht aerodynamisch optimiert ist und sich nicht selbsttätig in den Wind ausrichtet. Damit ist ein wirtschaftlicher Betrieb nicht möglich. Das gilt insbesondere für Windkraftanlagen vom VAWT-Typ (vertical axis wind turbine), die eher im Schwachwindbereich in niedrigen Höhen arbeiten.

Außerdem wird darauf hingewiesen, dass das Prinzip o. g. Patentanmeldung bereits über 2 Monate vorher als spezielle Ausführung angemeldet worden war (vgl. WO 2011/022836 A8 - Priorität 28.08.2009). Diese Vorrichtung richtet sich bei geringen Windgeschwindigkeiten nicht selbsttätig in den Wind aus, was sich leicht durch Nachbau, z.B. mit einem Turbinendurchmesser von ca. 1 m inkl. Kraftübertragung und angeschlossenem Generator nachweisen lässt.

Die Veröffentlichung US 2004/141845 A1 offenbart eine selbstausrichtende, zweiachsige Windturbine.

### Aufgabe und Lösung der Erfindung

Aufgabe der Erfindung: Es soll eine Radialturbine mit Leitblech eingesetzt werden, die sich selbsttätig in eine optimale Winkelposition zum einfallenden Wind dreht, sich also selber nachrührt, ohne dass hierfür eine Nachführungsanordnung erforderlich wäre. Die Vorteile des Leitbleches bei der Radialturbine sollen also kombiniert werden mit der Unabhängigkeit der Radialturbine von der einfallenden Windrichtung.

Diese Aufgabe wird erfindungsgemäß durch die Merkmale des Anspruchs 1 gelöst.

Vorteilhafte Ausgestaltungen der Erfindung sind in den Unteransprüchen angeführt.

Wichtig ist Folgendes: Zwei Turbinen befinden sich in einem durch Leitbleche geschlossenem System mit zusätzlichen abgekanteten Konzentrationsblechen, welche oberhalb und unterhalb der Turbinen angebracht sind. Durch das geschlossene System und die zusätzlichen Konzentrationsbleche wird der sog. "Magnus-Effekt" optimal ausgenutzt, wodurch das erfindungsgemäße System, welches auf einem Mast gelagert ist, sich eigenständig in den Wind drehen und somit immer optimal vom Wind angeströmt werden kann. Das "In den Wind drehen" ist bei mehreren konkreten Modellen im freien Wind nachgewiesen worden.

Der Magnus-Effekt, benannt nach seinem Entdecker Heinrich Gustav Magnus (1802-1870), ist ein Phänomen der Strömungsmechanik, nämlich die Querkraftwirkung (Kraft), die ein rotierender runder Körper (Zylinder oder Kugel) in einer Strömung erfährt.

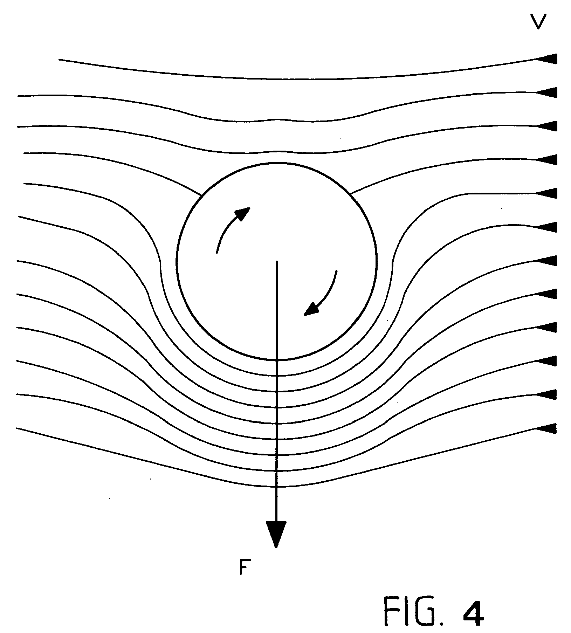

Eine rotierende Walze erzeugt aufgrund von Reibungseffekten eine Rotation des sie umgebenden Fluids um sich herum. Wird die Walze zusätzlich angeströmt, überlagern sich die Geschwindigkeiten des Fluids. Das Resultat ist, dass das Fluid die rotierende Walze auf einer Seite schneller umströmt als auf der anderen (im Ruhesystem der Walze). Auf der Seite der Walze, auf der die Reibungseffekte größer sind, fließt das Fluid scheinbar schneller. Dies resultiert in einem "Ausweichen" der Walze - die Walze wird nach unten gedrückt (siehe Figur 4).

### Beispiele:

- Fußballspieler schießen den Ball mit Effet, damit er in einem Bogen ins Tor fliegt. Je schneller er dreht, umso größer ist die Bahnablenkung (Bananenflanke, Flatterball).
- Tischtennisspieler und Tennisspieler nutzen den Effekt, z.B. beim Topspin und Slice.
- Curveballs im Baseball oder Riseballs im Softball
- Spin bowling im Cricket
- Golfbälle besitzen viele kleine Vertiefungen auf der Oberfläche, sogenannte *Dimples.* Sie verbessern als Turbulatoren das Anhaften der am Ball anliegenden und durch seine Rotation mitgeführten Grenzschicht. Dadurch verstärkt sich die Wirbelbildung und die damit einhergehende Ablenkung des Balls durch den Magnus-Effekt. Da der Golfball durch die Keilform des Golfschlägers rückwärts rotiert, wird er durch den Magnus-Effekt angehoben; er fliegt nicht nur wie eine Kanonenkugel, sondern erfährt einen Auftrieb. Zusätzliche Links- oder Rechts-Ablenkungen sind möglich und werden von Spielern, die diese Technik beherrschen, auch eingesetzt. Außerdem wird durch die überkritische, turbulente Umströmung der Luftwiderstand verringert, was wiederum zu größeren Flugweiten führt.

Erfindungsgemäß wird eine hohe Leistung kombiniert mit niedrigen Installationskosten erreicht, so dass die Wirtschaftlichkeit, bezogen auf die erzeugte Strommenge erheblich besser als bei den bekannten Windkraftanlagen mit horizontaler Achse und Flugzeugflügeln ist.

Zur Steigerung der Wirtschaftlichkeit ist ein Ringgenerator zur Stromerzeugung vorgesehen. Zusätzlich kann zur weiteren Steigerung der Wirtschaftlichkeit der Mast und die Leitfläche als Werbefläche eingesetzt werden.

Im Gegensatz zu den bekannten Windkraftanlagen mit horizontaler Achse und drei Flügeln kann die erfindungsgemäße Radialturbine auch bei relativ niedrigen Windgeschwindigkeiten betrieben werden. Aufgrund des Magnus-Effektes "zieht" die erfindungsgemäße Radialturbine sozusagen den Wind an und verstärkt geringe Windgeschwindigkeiten. Beispielsweise kann die erfindungsgemäße Radialturbine auch bei Zirkulationswinden eingesetzt werden, bei denen die Windgeschwindigkeit unten bei geringer Höhe höher als in großer Höhe ist, in welcher die dreiflügeligen Windkraftanlagen allein schon wegen der Flügelgröße betrieben werden müssen. Eine Windgeschwindigkeit, die auf jeden Fall zu niedrig ist für die bekannten Dreiflügler, reicht bei der erfindungsgemäßen Radialturbine zur Energieerzeugung aus.

Bei Schwankungen der Windrichtung passt sich die erfindungsgemäße Radialturbine, unter anderem auch aufgrund des Magnus-Effektes, selbsttätig an und dreht sich sofort in die optimale Richtung, auch bei Windgeschwindigkeiten unter 1 m/s. Derartige schnelle Anpassungen der Windkraftanlage sind bei den bekannten Dreiflüglern nicht möglich.

Da die erfindungsgemäße Radialturbine nur wenig Platz beansprucht, kann sie als Zusatz bei bereits vorhandenen Gebäude- oder Bauteilen verwendet werden, beispielsweise als Aufsatz auf eine Straßenlaterne.

### Ausführungsbeispiele

Im Folgenden werden ein oder mehrere Ausführungsbeispiele der Erfindung anhand von Zeichnungen näher beschrieben. In allen Zeichnungen haben gleiche Bezugszeichen die gleiche Bedeutung und werden daher gegebenenfalls nur einmal erläutert.

Es zeigen
- Figur 1: zeigt eine perspektivische Darstellung der erfindungsgemäßen Windkraftanlage mit zwei Radialturbinen,
- Figur 2: die konstruktiven Details eines Ausführungsbeispiels als Rohrmast-Aufhängungssystem in einer Ansicht von der Seite entsprechend A-A in Figur 3
- Figur 3: eine Aufsicht auf die Windkraftanlage,
- Figur 4: eine rotierende Walze mit umgebenden Fluid,
- Figur 5: den Fadentest,
- Figuren 6 bis 8: weitere Varianten mit geänderten Leitflächen 29 und zusätzlichen Konzentrationsblechen 30,
- Figur 9: DM-DZ-Kennlinien,
- Figur 10: weitere Kennlinien,
- Figur 11: eine Aufsicht mit zwei zusätzlichen Leitblechen 38, 39,
- Fig. 12 und Fig. 13a: Aufsichten mit optimiertem Leitblech in Form einer "Nase",
- Fig. 13b: einen Ansicht auf den Schnitt A-A in Figur 13a.

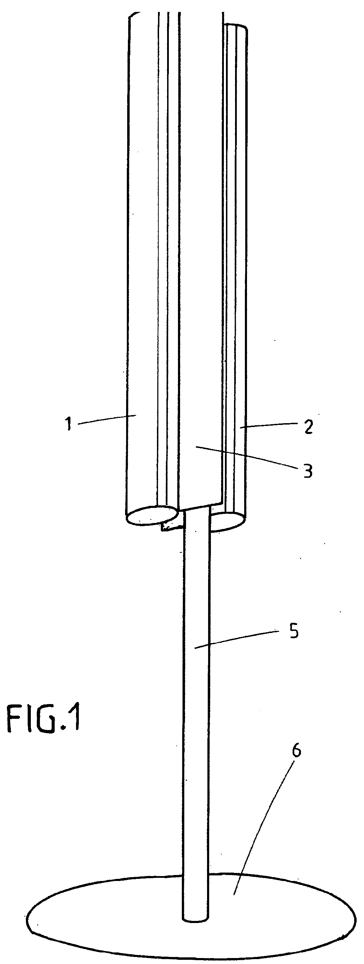

Figur 1 zeigt eine perspektivische Darstellung der erfindungsgemäßen Windkraftanlage mit zwei Radialturbinen 1, 2 und einem V-förmigen Windverteiler 3, wobei Radialturbinen und Windverteiler als Ganzes um eine vertikale Achse drehbar (schwenkbar) an einem Stahlmast 5 oder einem anderen Fundament 6 angebracht sind.

Die Effizienz der Windkraftanlage ist wesentlich von der Stellung des V-förmige Windverteilers, bezogen auf Abstand und Neigung zu den Turbinenblättern und der Turbinenachse, abhängig. Die Windkraftanlage wird dazu vorteilhaft so technisch ausgerüstet, dass je nach Windgeschwindigkeit die optimale Stellung des Windverteilers eingestellt werden kann. Die Einstellung kann einerseits als Festeinstellung für die mittlere (wahrscheinlichste) Windgeschwindigkeit erfolgen; andererseits ist auch eine bezogen auf die aktuelle Windgeschwindigkeit automatisch gesteuerte Nachstellung in die optimale Position möglich.

Bei einer Gesamthöhe von 20 m beträgt die Höhe der Turbinen 10 m. Die Turbinen haben einen Durchmesser von 1 m. Die erwartete Kapazität bei einem Küstenstandort, wo die Windkraftanlage den zirkulierenden Küstenwind auffängt, beträgt ca. 21700 kWh, jährlich gemittelt mit einem Wirkungsgrad von 38 %.

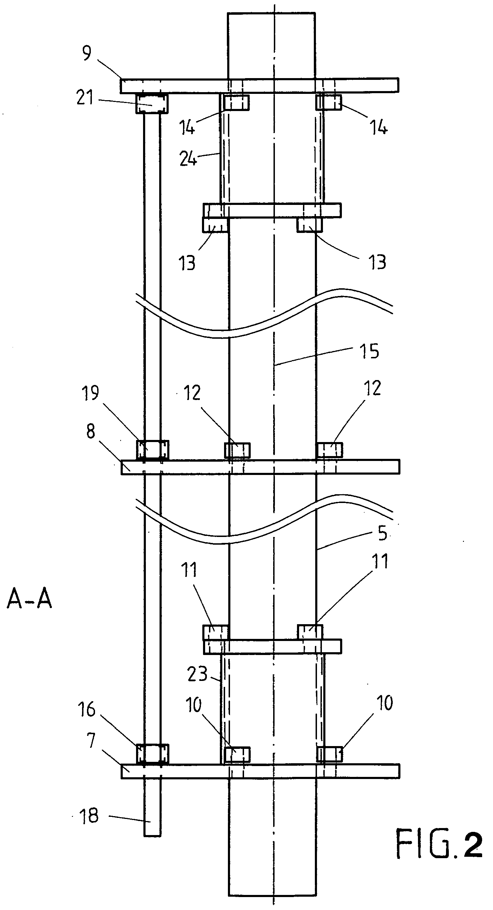

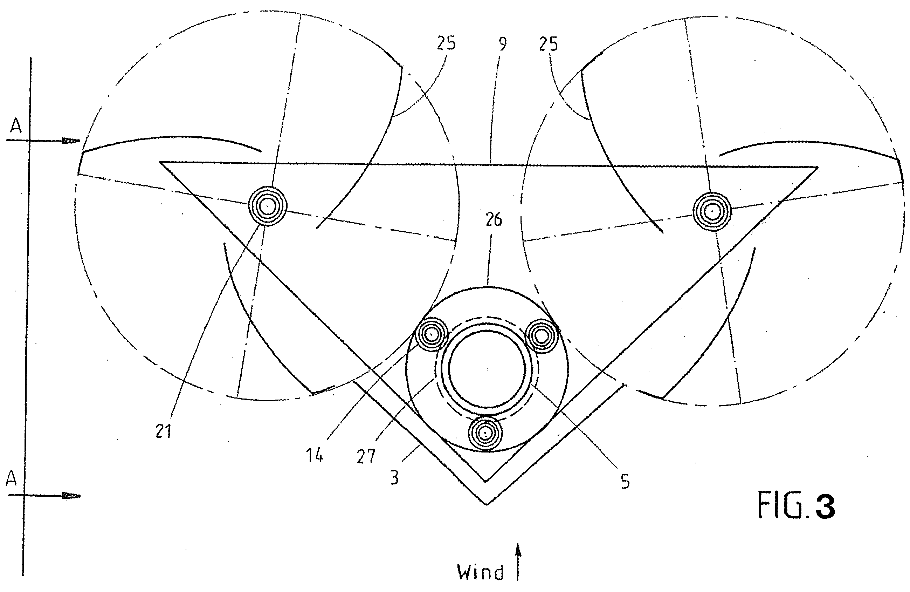

Figur 2 zeigt die konstruktiven Details eines Ausführungsbeispiels als Rohrmast-Aufhängungssystem in einer Ansicht von der Seite entsprechend A-A in Figur 3. An dem 20 m hohen Stahlmast 5 sind drei Trägerplatten 7, 8, 9 mittels Lager 10, 11, 12, 13, 14 drehbar um die Längsachse 15 des Stahlmastes 5 angebracht. Die untere Trägerplatte 7 hat drei Drehlager 10 am Stahlmast 5 und zwei Turbinenlager 16, 17 an der Turbinenachse 18. Die mittlere Trägerplatte 8 hat drei Drehlager 12 und zwei Turbinenlager 19, 20 und die obere Trägerplatte 9 hat drei Drehlager 14 und zwei Turbinenlager 21, 22. Die Turbinenlager 17, 20 und 22 sind in Figur 2 nicht dargestellt und gehören zur anderen Turbine.

Die Drehlager 10, 11 einerseits und 13, 14 andererseits sind durch einen Distanzkragen 23, 24 auf Abstand gehalten. Der Distanzkragen ist ausgebildet als Hohlrohr.

Figur 3 zeigt schließlich eine Aufsicht auf die Windkraftanlagen. Erkennbar sind die Turbinenschaufeln 25. Eingezeichnet ist mit einem Pfeil auch die Windrichtung, wenn sich die Windkraftanlage erfindungsgemäß in den Wind gedreht hat, so dass die Spitze des V-förmigen Windverteilers 3 dem Wind entgegen zeigt.

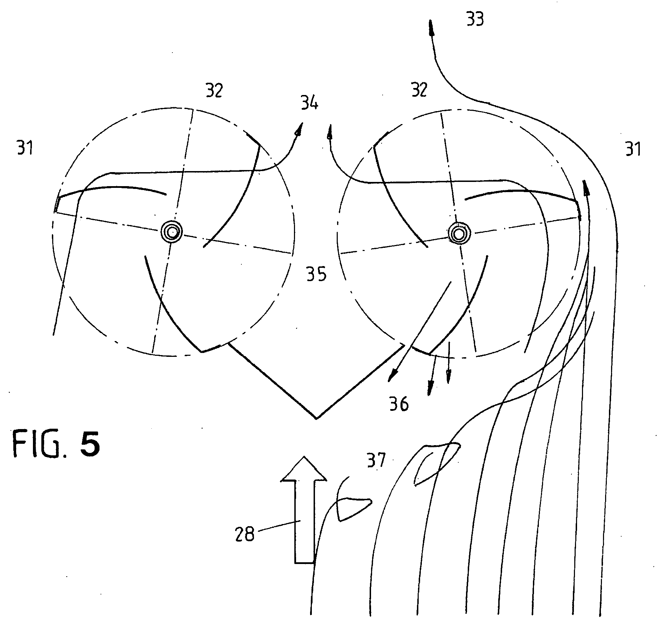

Mit der erfindungsgemäßen Anlage wurde ein so genannter Fadentest durchgeführt (Figur 5). Wind 28 bis 6 m/s blies gegen die Anlage. Das Verhältnis von der Umfangsgeschwindigkeit der Turbine zum Wind war 3 : 1. In Figur 5 ist der Abriss der Fadenrichtung (unten im Bild) deutlich erkennbar. Die erfindungsgemäße Anlage kann Energie aus der Druckdifferenz oder der potentiellen Energie des Windes extrahieren, nicht bloß aus der kinetischen Energie der bewegten Luft.

Die Bedeutung der Bezugszahlen in Figur 5 geht aus der Bezugszeichenliste hervor.

Ein Nebeneffekt ist der Pingpong-Ball, der in einem schrägen Luftstrahl "hängt": Durch den Coanda-Effekt löst die Strömung des Luftstrahles nicht vom Ball ab, sondern umrundet ihn (fast) völlig ohne Ablösung. Da der Ball leicht unterhalb des Zentrums des Luftstrahles hängt, erfolgt die Umströmung nicht symmetrisch. Es wird mehr Luft nach unten abgelenkt, da an der Unterseite des Balles die Strömungsgeschwindigkeit und der Strahlquerschnitt gegenüber der Oberseite geringer sind. Als Reaktion erfährt der Ball eine Kraft nach oben. Dies erfolgt in Überlagerung mit dem Magnus-Effekt (der Ball dreht sich). Beide Effekte, jeder für sich, lassen den Ball nicht nach unten fallen, sondern nur an der Unterseite des Luftstrahles entlang-"rutschen". Der Widerstand, den der Ball der Strömung entgegensetzt, hält ihn auf Distanz zur Düse und die Schwerkraft verhindert, dass er einfach weggeblasen wird. So kann der Ball in einer mehr oder weniger stabilen Position schweben.

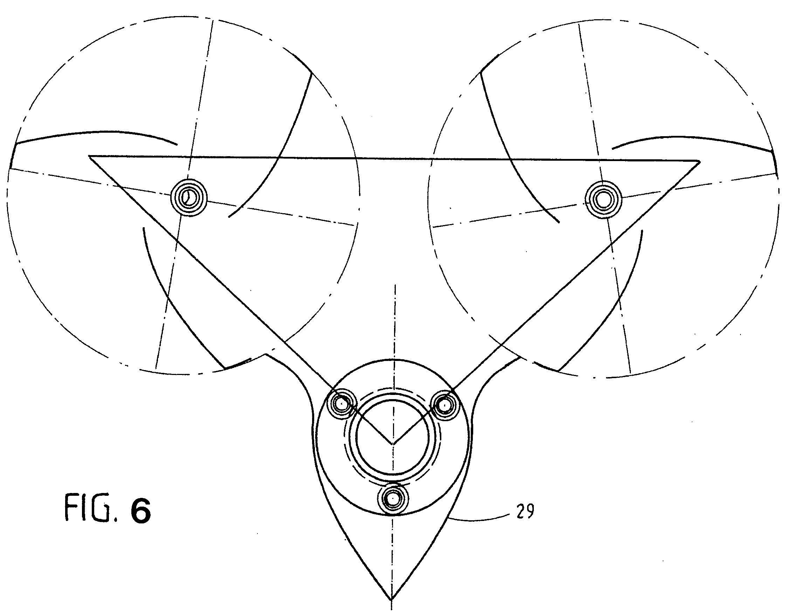

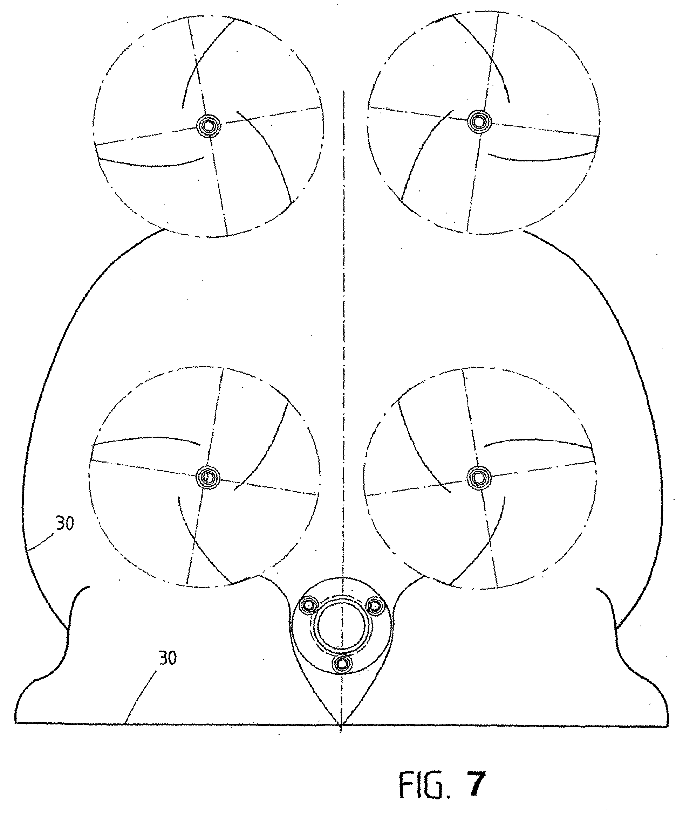

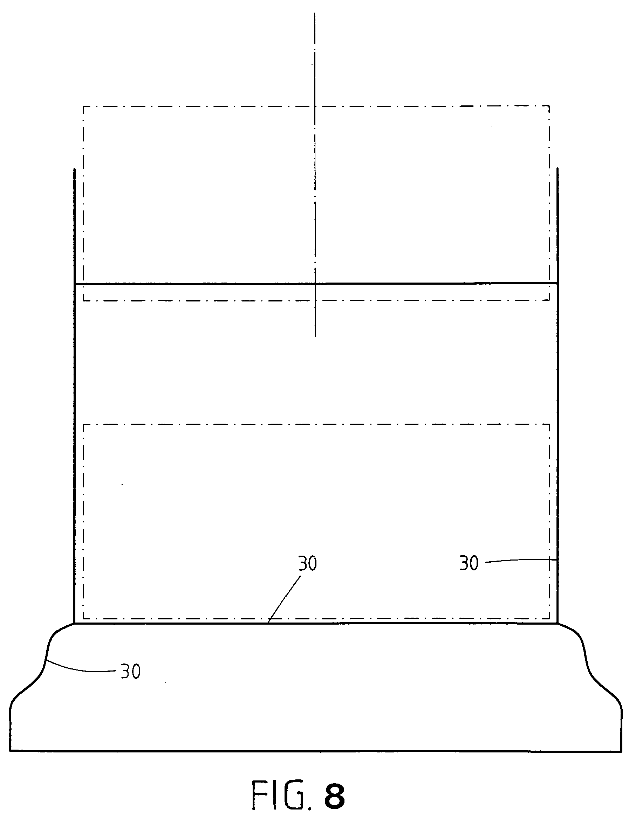

Die Figuren 6 bis 8 zeigen weitere Varianten mit geänderten Leitflächen 29 und zusätzlichen Konzentrationsblechen 30.

### Auswertung statischer und dynamischer Drehmomentmessungen an der erfindungsgemäßen Windturbine mit Durchmesser 1 m und Länge 1 m in Moers

In die Auswertung wurden folgende Daten direkt bzw. indirekt mit einbezogen:
- Statische Drehmomentmessungen (Stillstandsdrehmoment) vom 24.-26.9.2010
- Dynamische Drehmomentmessungen in der Zeit vom 4. - 8.11.2010

Bei den dynamischen Messungen wurde jeweils noch eine Wirbelstrombremse eingesetzt, mit der verschiedene Bremskräfte durch Variation des Spulenstromes eingestellt werden können.

Die Messwerte wurden auf Plausibilität geprüft und mittels diverser Mittelungs- und Filterverfahren ausgewertet.

In der nachfolgenden Tabelle sind die Ergebnisdaten für Windgeschwindigkeiten zwischen 2 und 8 m/s zusammengestellt.

**Tabelle 1:**

| Ergebnisdaten zur Auswertung statischer und dynamischer Drehmomentmessungen (Sept./Nov. 2010) an der erfindungsgemäßen Windturbine mit Durchmesser 1 m und Länge 1 m in Moers | | | |
|---|---|---|---|
| Windgeschw. [m/s] | Drehzahl [U/min] | Drehmoment [Nm] | mechanische Leistung[W] *(daraus berechnet)* |
| 2 | 0 | 0,45 | 0,0 |
| 2 | 17 | 0,90 | 1,6 |
| 2 | 20 | 0,69 | 1,4 |
| 2 | 55 | 0,16 | 0,9 |
| 2 | 78 | 0,00 | 0,0 |
| 3 | 0 | 0,90 | 0,0 |
| 3 | 27 | 1,85 | 5,2 |
| 3 | 35 | 1,48 | 5,4 |
| 3 | 35 | 1,40 | 5,1 |
| 3 | 40 | 1,27 | 5,3 |
| 3 | 42 | 0,93 | 4,1 |
| 3 | 50 | 0,87 | 4,6 |
| 3 | 55 | 0,52 | 3,0 |
| 3 | 60 | 0,70 | 4,4 |
| 3 | 80 | 0,21 | 1,8 |
| 3 | 105 | 0,00 | 0,0 |
| 3 | 107 | 0,00 | 0,0 |
| 3 | 115 | 0,00 | 0,0 |
| 4 | 0 | 1,45 | 0,0 |
| 4 | 50 | 2,45 | 12,8 |
| 4 | 55 | 2,15 | 12,4 |
| 4 | 57 | 1,90 | 11,3 |
| 4 | 60 | 1,80 | 11,3 |
| 4 | 65 | 1,55 | 10,6 |
| 4 | 69 | 1,25 | 9,0 |
| 4 | 80 | 0,82 | 6,9 |
| 4 | 80 | 1,12 | 9,4 |
| 4 | 95 | 0,64 | 6,4 |
| 4 | 107 | 0,28 | 3,1 |
| 4 | 137 | 0,00 | 0,0 |
| 4 | 139 | 0,00 | 0,0 |
| 4 | 145 | 0,00 | 0,0 |
| 5 | 0 | 2,00 | 0,0 |
| 5 | 75 | 3,00 | 23,6 |
| 5 | 78 | 3,30 | 27,0 |
| 5 | 85 | 2,80 | 24,9 |
| 5 | 85 | 2,23 | 19,8 |
| 5 | 85 | 1,85 | 16,5 |
| 5 | 93 | 1,42 | 13,8 |
| 5 | 110 | 1,35 | 15,6 |
| 5 | 120 | 0,31 | 3,9 |
| 5 | 120 | 0,98 | 12,3 |
| 5 | 127 | 0,71 | 9,4 |
| 5 | 165 | 0,00 | 0,0 |
| 5 | 174 | 0,00 | 0,0 |
| 5 | 177 | 0,00 | 0,0 |
| 6 | 0 | 2,70 | 0,0 |
| 6 | 100 | 3,65 | 38,2 |
| 6 | 113 | 2,70 | 31,9 |
| 6 | 115 | 3,35 | 40,3 |
| 6 | 116 | 2,15 | 26,1 |
| 6 | 120 | 1,81 | 22,7 |
| 6 | 140 | 1,53 | 22,4 |
| 6 | 152 | 0,34 | 5,4 |
| 6 | 160 | 0,75 | 12,6 |
| 6 | 195 | 0,00 | 0,0 |
| 6 | 209 | 0,00 | 0,0 |
| 6 | 210 | 0,00 | 0,0 |
| 7 | 0 | 3,50 | 0,0 |
| 7 | 130 | 4,30 | 58,5 |
| 7 | 147 | 3,27 | 50,3 |
| 7 | 160 | 1,65 | 27,6 |
| 7 | 175 | 0,79 | 14,5 |
| 7 | 225 | 0,00 | 0,0 |
| 7 | 245 | 0,00 | 0,0 |
| 8 | 0 | 4,25 | 0,0 |
| 8 | 162 | 4,85 | 82,3 |
| 8 | 190 | 3,75 | 74,6 |
| 8 | 210 | 0,84 | 18,5 |
| 8 | 250 | 0,00 | 0,0 |
| 8 | 275 | 0,00 | 0,0 |

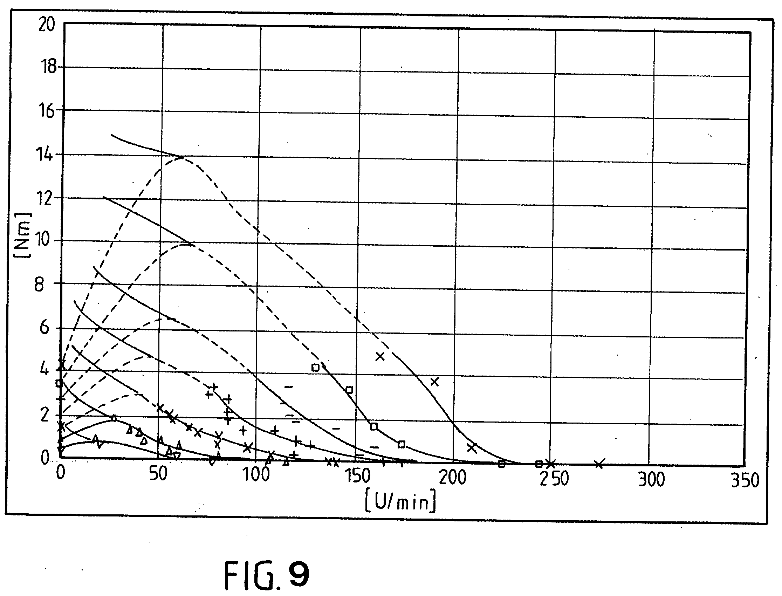

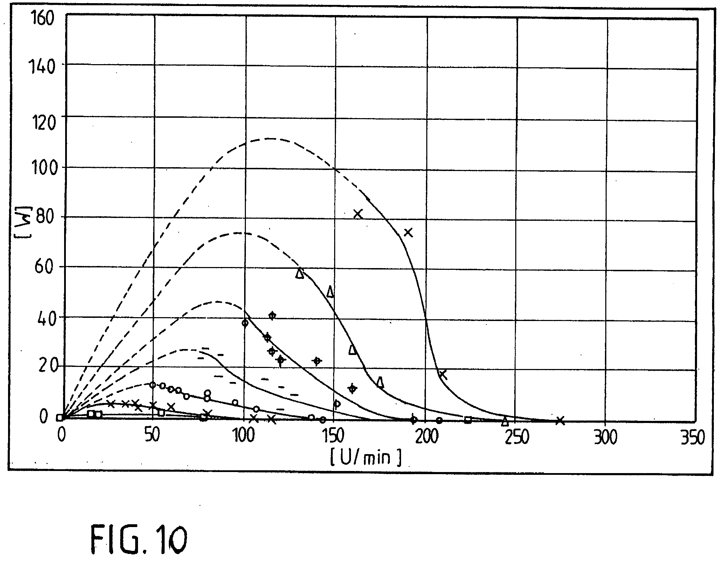

Die Figuren 9 und 10 zeigen die graphische Darstellung mit entsprechend interpolierten Linien.

Figur 9: DM-DZ-Kennlinien, Interpolation mit mittleren PowerCoeffizient 35%

Drehmoment [NM] vs. Drehzahl [U/min]; Parameter Windgeschwindigkeit [m/s]

### Es bedeuten

◆ 2 m/s Messung
▲ 3 m/s Messung
X 4 m/s Messung
+ 5 m/s Messung
- 6 m/s aus Messung
■ 7 m/s aus Messung
× 8 m/s aus Messung
------- max. DM
- - - - mittl. DM
Figur 10: Kennlinien
mech. Leistung
Extrapolation im Max-Powerbereich mit mittleren PC = 35 %
Mechanische Leistung [W] vs. Drehzahl [U/min]; Parameter Windgeschwindigkeit [m/s]

Es bedeuten
■ 2 m/s WSB
× 3m/sWSB
● 4 m/s WSB
- 5 m/s WSB
◆ m/s aus WSB
▲ m/s aus WSB
X 8 m/s aus WSB

Da die dynamischen Messungen bisher nur mit relativ schwachen Bremskräften durchgeführt wurden, wurde die Interpolation außerhalb des bisher erfassten Messbereichs gestrichelt dargestellt. Dabei wurde angenommen, dass im Max.-Power-Punkt ein Leistungsbeiwert (Power-Coefficient) von 35 % erreicht wird. Anhand der Streuung der Ergebnisdaten kann der Leistungsbeiwert (Power-Coefficient) vorbehaltlich eines ausreichend genauen Kalibriernachweises für die verwendete Messtechnik grob mit ca. 30 ... 40% beziffert werden. Andernfalls sind die systematischen Fehler der Messtechnik zusätzlich zu berücksichtigen. Der Leistungsbeiwert (Power-Coefficient) kann genauer bestimmt werden, wenn weitere Messungen bei höheren Bremskräften berücksichtigt werden.

Das erfindungsgemäße Turbinensystem lässt sich mit Vorteil auch im Wasser zur Energiegewinnung aus der Wasserströmung, also als "Marine-Turbinensystem" einsetzen.

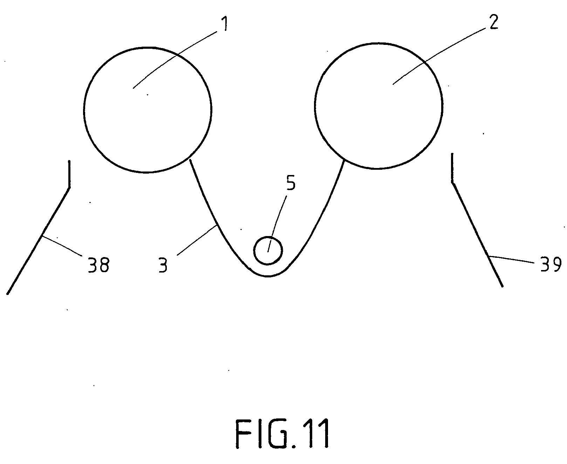

Durch Anbringen von zwei zusätzlichen Leitblechen 38, 39 (siehe Figur 11) entsteht der so genannte Venturi-Effekt. Der Venturi-Effekt steigert die Effizienz der Turbinen.

Aus der Entwicklung wird hier ein weiteres Ausführungsbeispiel vorgestellt, das in den Voruntersuchungen im turbulenten Wind hohe Effizienzwerte gezeigt hat.

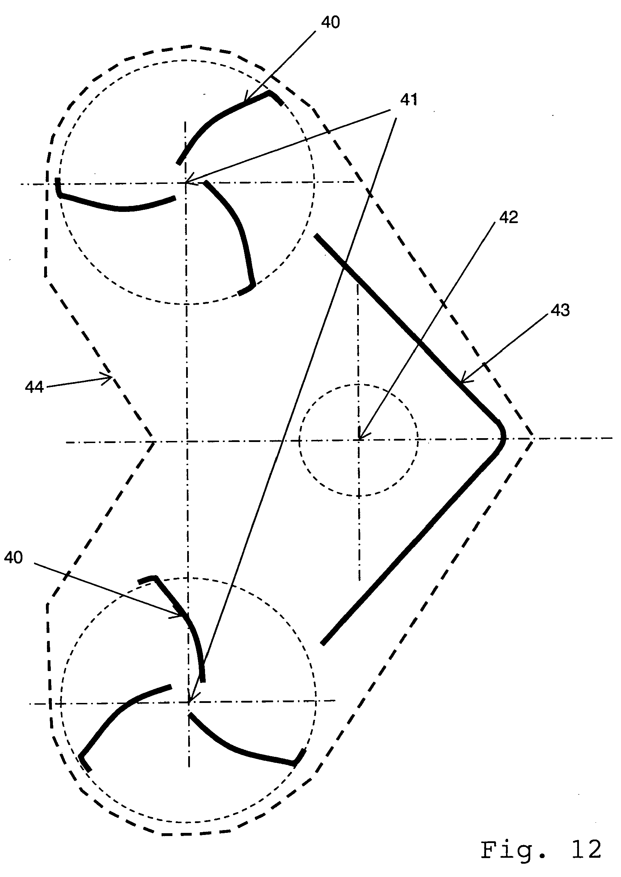

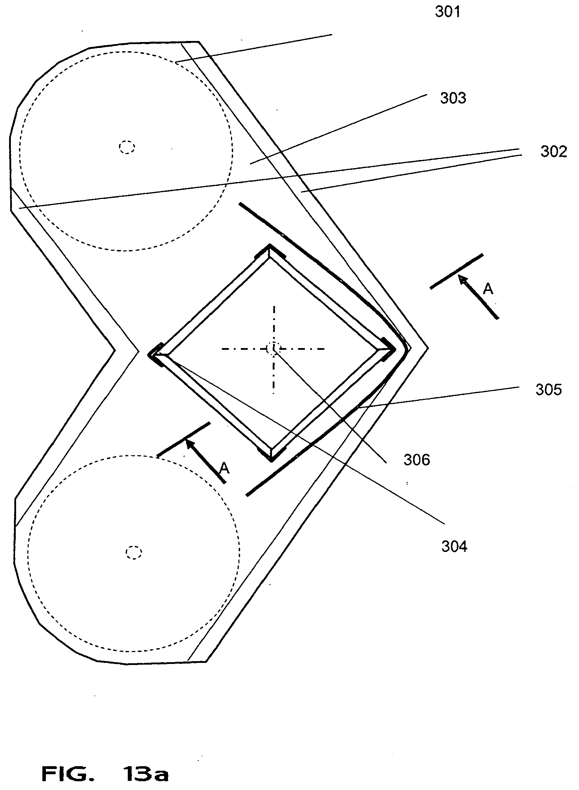

Der Drehpunkt zur selbstständigen Azimutanpassung und das Leitblech in Form einer "Nase" wurden optimiert (vgl. Fig. 12 bzw. Fig. 13a). Hier dreht sich das Turbinensystem bei guter Lagerung des Turbinentragssystems bereits ab ca. 1,0 m/s optimal in den Wind.

Vorteilhaft wird dazu der obere Turmteil drehbar gegenüber dem unteren Turmteil gelagert. Die Lagerung wird so ausgelegt, dass das Azimutdrehmoment oberhalb ca. 1,0 m/s Windgeschwindigkeit ausreichend ist, um unter Berücksichtigung des Winddruckes die Bremskräfte der Lager sicher zu überwinden.

Im Unterschied zur veröffentlichten Lösung der internationalen Patentanmeldung WO 2011/059760 A2 (Priorität 29.10.2009) handelt es sich hier um ein aerodynamisch optimiertes System, das sich selbsttätig in den Wind ausrichtet. Nur wenn sichergestellt werden kann, dass die Ausrichtung in den Wind ohne (bzw. fast ohne) zusätzliche Energie erfolgen kann, ist ein effizienter Betrieb überhaupt möglich. Das gilt umso mehr für Windkraftanlagen vom VAWT-Typ, die eher im Schwachwindbereich in niedrigen Höhen arbeiten.

Außerdem wird darauf hingewiesen, dass das Prinzip der o. g. Patentanmeldung bereits über 2 Monate vorher als spezielle Ausführung angemeldet worden war (vgl. WO 2011/022836 A8 - Priorität 28.08.2009). Zur Abgrenzung mit der letztgenannten Anmeldung mit früherer Priorität sei daraufhingewiesen, dass sich diese Vorrichtung bei geringen Windgeschwindigkeiten nicht in den Wind ausrichtet, was sich leicht durch Nachbau, z.B. mit einem Turbinendurchmesser von ca. 1 m inkl. Kraftübertragung und angeschlossenem Generator nachweisen lässt.
Anstelle der beschriebenen Segel wird außerdem hier ein aerodynamisch optimiertes Doppelleitblech in Form einer "Nase" eingesetzt, welches effizienzverstärkend für das Gesamtsystem wirkt und gleichzeitig die selbsttätige Ausrichtung in den Wind für alle energetisch relevanten Winde, einschließlich schwacher Winde ab Windstärke 1, gewährleistet.

Die erfindungsgemäße V-förmige "Nase" (Windverteiler genannt) ist vorrangig weder als Beschleuniger (accelerator) noch als Ableiter/Ablenker (deflector) entwickelt worden. Vielmehr dient es als Resonanzraum für Infraschall im Bereich ca. 1 bis 10 Hz (d. h. geräuschlos). Nase und Rotorblech bilden eine Luftführungsvorrichtung um im Innenraum der Nase eine Druckschwingung zwischen Nase und Rotorblech zu erzeugen. Diese Druckschwingung läuft phasengleich mit der Turbinenrotation. Durch diese geräuschlose Druckschwingung und eine allgemein sehr vibrationsarme Konstruktion wird gerade im Schwachwindbereich die Effizienz der Turbine verstärkt, so dass sie hervorragend im urbanen Bereich einsetzbar ist.

Vorzugsweise ist der Abstand des V-förmigen Windverteilers zu den Turbinen variabel und verstellbar, um für alle Windverhältnisse optimale Betriebsbedingungen zu erreichen.

Vorzugsweise ist die Kante des V-förmigen Windverteilers (3) abgerundet, um eine Neigung zum Pfeifen und zur Turbulenzbildung zu vermeiden.

Ein weiterer Parameter zur Charakterisierung des Ausführungsbeispiels ist die Höhe der Turbine bzw. Turbinenreihe. Funktionell ist die Höhe relativ beliebig einstellbar, zum Beispiel je nach Einsatzort etwa das 0,3...100-fache des Turbinenradius, wobei aus Konstruktions- bzw. Stabilitätsgründen eine hohe (bzw. lange) Turbine als formschlüssige Ankopplung mehrerer Turbinen auf einer ggf. mittels formschlüssiger Kupplungen flexibel verbundenen Welle ausgeführt sein kann.

Im Ausführungsbeispiel wird ein Verhältnis von Höhe zu Radius von ca. 20 eingestellt. Dabei sind die Turbinen ca. alle 5 m einzeln gelagert und über eine flexible, formschlüssige Kupplung aneinander und am Ende der Welle direkt bzw. indirekt über ein Getriebe mit einem Stromgenerator verbunden, wobei die Lager mit dem rotierbaren Teil des Mastes fest verbunden sind.

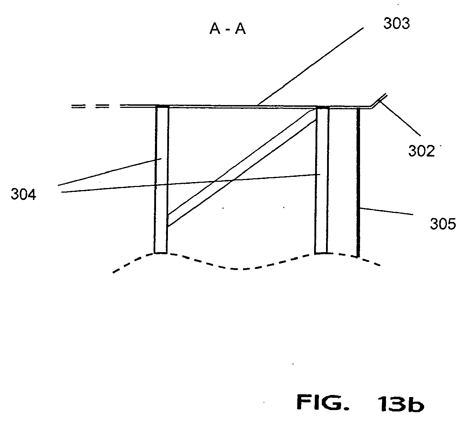

Erfindungsgemäß kann mittels eines ebenen, an den Außenkanten ggf. nach leicht bis ca. 45° von der Turbine weg abgekanteten Windführungsbleches der Wind im Randbereich wirksamer auf die Turbine geleitet werden (vgl. Fig. 13a und 13b). Figur 13b zeigt einen Ansicht auf den Schnitt A-A in Figur 13a. Außerdem wird dadurch die Stabilität der Turbinenaufhängung verbessert.
Zur Abwendung bzw. Abmilderung von Gefahren bei schweren Stürmen kann das System mit einem selbstdämpfenden Regelungssystem derart ausgestattet werden, dass die Turbinen oberhalb einer bestimmten Windgeschwindigkeit einander angenähert werden; dadurch wird der rückseitige Staudruck hinter der "Nase" verstärkt, der schließlich zur Dämpfung der Drehzahl führt, so dass bei geeigneter Auslegung dieses Dämpfungssystems die Drehzahlen im gefahrlosen Bereich gehalten werden können. Die Dämpfung ist nachweisbar, wenn der Abstand zwischen beiden Turbinenachsen kleiner als 3 x R1 ist (R1 = Turbinenradius). Eine zusätzliche mechanische Bremse wäre nur für einen sehr gering wahrscheinlichen Notfall bzw. für Wartungsarbeiten notwendig.
Ziel des Turbinensystems ist es, optimal Energie aus dem Wind zu gewinnen, wobei die Gewinnung von Elektroenergie Priorität hat. Dazu wird ein Generator passend zum Turbinensystem mechanisch direkt bzw. indirekt über ein Getriebe kraft- oder formschlüssig mit der Turbinenachse verbunden, die mit den Turbinen kraft- oder formschlüssig verbunden ist, um die Kraftübertragung von Turbine auf den Generator zu gewährleisten. Es kann dabei ein Generator für beide Turbinen eingesetzt werden, oder jede Turbine wird einzeln mit jeweils einem Generator verbunden.
Der Generator wird passend zur Windgeschwindigkeit so gesteuert, dass durch Regelung der generierten Leistung ein elektromagnetisches Bremsmoment auf die Turbine übertragen wird, so dass sich eine optimale Schnelllaufzahl (engl. Tip Speed Ratio = TSR) zur Energiewandlung einstellt, die zwischen 45% und 65% bezogen auf die Schnelllaufzahl der ungebremsten Turbine beträgt. Damit wird erreicht, dass stets die maximal mögliche Energie "geerntet" werden kann.

Die erzeugte Elektroenergie (Gleich-, Wechsel- bzw. Drehstrom) kann in mehrfacher Weise verwertet werden:
a) Umwandlung in netzsynchrone Wechselspannung und Einspeisung ins öffentliche Stromnetz
b) Zwischenspeicherung in einem lokalen, z. B. im Turm befindlichen Batteriesystem, das gemäß den Anforderungen des Netzbetreibers unter Berücksichtigung der Aufrechterhaltung eines ständig aufnahmebereiten Batteriesystems, stoßweise mit hohem Wirkungsgrad in netzsynchrone Wechselspannung umgewandelt und dann ins öffentliche Stromnetz eingespeist wird. Bei dieser Variante wird es Zeiten geben, wo nur aufgeladen wird, wo nur entladen und ins Netz eingespeist wird oder wo Aufladung und Entladung parallel ablaufen. Optional lässt diese Variante auch noch die Zwischenspeicherung von Strom aus dem Netz in Zeiten schwacher Stromabnahme zu; ein solches Ausführungsbeispiel wäre ein kombiniertes Windkraftsystem mit integrierter, intern und extern nutzbarer Speicherkomponente.

Um Überladungen des Batteriesystems bzw. Überlastungen des Stromwandlers zur Netzeinspeisung sicher auszuschließen, sieht die Steuerung im Ausführungsbeispiel vor, dass zu viel erzeugte Elektroenergie, die weder in eine Batterie geladen noch ins Netz eingespeist werden kann, gefahrlos und verschleißfrei über einen Chopper-Widerstand in Wärme umgewandelt werden kann. Mittels dieser Steuerung gelingt es, den Nutzungsbereich relevanter Windgeschwindigkeiten optimal auszuweiten.

Eine weitere Ausführungsvariante bezieht sich auf die Nutzung als Werbeträger bzw. als Straßenbeleuchtung. An dem Turbinensystem können unter Einhaltung der äußeren Formvorgaben (Turbine, Nasen-Leitblech, obere und untere Abdeckung) beliebig hocheffiziente Leuchtmittel, z. B. LEDs für Werbebeleuchtung bzw. Straßenbeleuchtung angebracht werden. Die Stromversorgung würde direkt aus dem Batteriesystem erfolgen und ist damit auch noch netzunabhängig.

Netzunabhängig ist auch die Steuerung des Turbinensystems, da diese mit einer unabhängigen, brandsicher gelagerten und permanent überwachten Batterie versorgt wird.

Eine weitere Ausführungsvariante betrifft die Nutzung als Träger für urbane Infrastrukturmaßnahmen, z.B. Warnmelder, Überwachungskameras, Mobilfunkantennen, urbanes WLAN-Intranet, Anzeigetafeln, Verkehrsleiteinrichtungen, Breitband-Internetverbindung, etc. Der besondere Vorteil besteht auch hier, dass eine unabhängige Stromquelle (Batteriespeicher) lokal vor Ort vorhanden ist.

Bei niedriger Nachfrage an elektrischer Energie kann die Wind- und Sonnenenergie lokal für spätere Verwendung gespeichert werden und bei gezielter Abgabe in Spitzenzeiten ein besonderer wirtschaftlicher Nutzen erzielt werden.

In einem weiteren Ausführungsbeispiel wird oberhalb der Drehverbindung, die auf einem feststehenden Mast befestigt ist, eine Gittermastkonstruktion vorgesehen, die als Gerüst für das spezielle Akkumulatoren- und Turbinen-Aufhängungssystem genutzt wird und/oder werden kann (vgl. Fig. 13a). Der Hohlraum innerhalb des Gittermastes bietet genügend Platz für die sichere Aufstellung/Befestigung von Akkumulatoren und der Ladesteuerung; gleichzeitig können die Kabellängen zum Generator kurz gehalten werden, um Ohm'sehe Verluste gering zu halten.

Vorteilhaft ist die Zusammenführung von mehreren Windtrackern zu einem dezentralen netzkommunikativen Energieversorgungsssystem und anderen Anwendungen. Daher wird vorgeschlagen, dass eine Anordnung der erfindungsgemäßen Turbinensysteme und/oder der Windtracker entlang der Verkehrs-Infrastruktur wie Straßen, Autobahnen, Eisenbahnlinien, Kanälen vorgesehen ist, die zusätzlich der Telekommunikation und/oder der Zwischenspeicherung von Strom aus dem Netz in Zeiten schwacher Stromabnahme und/oder der Nutzung als Werbeträger und/oder als Straßenbeleuchtung und/oder zur Bereitstellung von Sicherheitsräumen dient.

### Bezugszeichenliste

- 1: Radialturbine
- 2: Radialturbine
- 3: Windverteiler
- 5: Stahlmast
- 6: Fundamentplatte
- 7: Trägerplatte
- 8: Trägerplatte
- 9: Trägerplatte
- 10: (Dreh-)Lager
- 11: (Dreh-)Lager
- 12: (Dreh-)Lager
- 13: (Dreh-)Lager
- 14: (Dreh-)Lager
- 15: Längsachse
- 16: Turbinen-Lager
- 17: Turbinen-Lager
- 18: Turbinenachse
- 19: Turbinen-Lager
- 20: Turbinen-Lager
- 21: Turbinen-Lager
- 22: Turbinen-Lager
- 23: Distanzkragen
- 24: Distanzkragen
- 25: Turbinenschaufeln
- 26: oberer Kragenflansch
- 27: Führungsflansch
- 28: Wind
- 29: geänderte Leitfläche
- 30: Konzentrationsblech bzw. Konzentrationsfläche
- 31: Magnus-Effekt
- 32: Coanda-Effekt
- 33: Magnus-Coanda-Überlagerung
- 34: High Lift
- 35: Unterdruck
- 36: Überdruck
- 37: Fadenrichtung riss ab
- 38: äußere Leitfläche
- 39: äußere Leitfläche
- 40: Turbine bzw. Turbinenflügel
- 41: Rotationszentrum der Turbine
- 42: Azimutrotationszentrum des Turbinensystems
- 43: Nasen-Leitblech
- 44: Begrenzung des oberen bzw. unteren Windführungsbleches
- 301: Außenradius der Turbine bzw. der Turbinenflügel
- 302: Abkantung des Windführungsbleches
- 303: Windführungsblech
- 304: Gittermast
- 305: V-förmiger Windverteiler

## Patentansprüche

1. Wind- und/oder Wasserkraftanlage,
wobei zwei nebeneinander und parallel ausgerichtete Radialturbinen (1, 2) mit einer vertikalen Rotationsachse angeordnet sind, die miteinander verbunden und um eine Schwenkachse (15) parallel zu den Turbinenachsen (18) verschwenkbar sind, wobei die Schwenkachse und ein V-förmiger Windverteiler (3) außerhalb der Verbindungslinie der Turbinenachsen und beide auf der gleichen Seite der Verbindungslinie liegen,
**dadurch gekennzeichnet,**
**dass** der obere und/oder untere Abschluss der Turbinen ein ebenes Windführungsblech (303) mit einer Abkantung (302) an den Außenkanten aufweist, wobei das Windführungsblech (303) von den Turbinen weg abgekantet ist.

2. Wind- und/oder Wasserkraftanlage nach Anspruch 1,
**dadurch gekennzeichnet,**
**dass** die Schwenkachse (15) eine Drehverbindung aufweist und oberhalb der Drehverbindung ein Gittermast vorgesehen ist, an der ein Akkumulatorsystem und die Steuer- und Stromumwandlungseinrichtung sowie die Halterung für die Turbinen befestigbar sind.

3. Wind- und/oder Wasserkraftanlage nach Anspruch 1,
**dadurch gekennzeichnet,**
**dass** die beiden Turbinen in gegenläufiger Richtung rotieren.

4. Wind- und/oder Wasserkraftanlage nach Anspruch 2,
**dadurch gekennzeichnet,**
**dass** der Gittermast die obere, untere und mittlere Lageraufhängung der Turbinen zusammen mit dem V-förmigen Windverteiler sowie die oberen und unteren abgekanteten Abschlussflächen hält.

5. Wind- und/oder Wasserkraftanlage nach Anspruch 2,
**dadurch gekennzeichnet,**
**dass** ein in die Drehverbindung integrierter Schleifring zum Übertragen der elektrischen Leistung und der elektronischen Signale vom drehbaren Teil zu den stationären Anschlüssen vorgesehen ist,

6. Wind- und/oder Wasserkraftanlage nach Anspruch 1,
**dadurch gekennzeichnet,**
**dass** ein Ringgenerator zur Stromerzeugung vorgesehen ist.

7. Wind- und/oder Wasserkraftanlage nach Anspruch 6,
**dadurch gekennzeichnet,**
**dass** der Generator zum Einstellen der optimalen Schnelllaufzahl der Turbine steuerbar ist.

8. Wind- und/oder Wasscrkraftanlage nach Anspruch 2,
**dadurch gekennzeichnet,**
**dass** die Wird- und/oder Wasserkraftanlage über die Drehverbindung an einem Mast (5), Ponton, Fundament, Gebäudedach oder dergleichen befestigt ist.

9. Wind- und/oder Wasserkraftanlage nach Anspruch 1,
**dadurch gekennzeichnet,**
**dass** mehrere dieser Wind- und/oder Wasserkraftanlagen an einem Mast übereinander und/oder nebeneinander montiert sind.

10. Wind- und/oder Wasserkraftanlage nach Anspruch 1,
**dadurch gekennzeichnet,**
**dass** zusätzlich äußere Leitflächen (38, 39) auf der gleichen Seite wie der V-förmige Windverteiler (3) angeordnet sind.

11. Wind- und/oder Wasserkraftanlage nach Anspruch 1,
**dadurch gekennzeichnet,**
**dass** eine Einrichtung zum selbsttätigen Annähern der Radialturbinen beim Erreichen einer vorgegebenen Windgeschwindigkeit vorgesehen ist.

12. Wind- und/oder Wasserkraftanlage nach Anspruch 1,
**dadurch gekennzeichnet,**
**dass** die Radialturbinen in mehrere längs einer Welle einzeln gelagerte Einzelturbinen aufgeteilt sind.

13. Wind- und/oder Wasserkraftanlage nach Anspruch 6,
**dadurch gekennzeichnet,**
**dass** die erzeugte Elektroenergie in mehrfacher Weise verwertet wird, insbesondere durch Umwandlung in netzsynchrone Wechselspannung und Einspeisung ins öffentliche Stromnetz und/oder durch Zwischenspeicherung in einem lokalen Akkumulatorsystem, und/oder durch Nutzung des Akkumulatorsystems zur Zwischenspeicherung von überschüssigem Netzstrom.

14. Wind- und/oder Wasserkraftanlage nach Anspruch 1,
**dadurch gekennzeichnet,**
**dass** die Kante des V-förmigen Windverteilers (3) abgerundet ist.

15. Wind- und/oder Wasserkraftanlage nach Anspruch 1,
**dadurch gekennzeichnet,**
**dass** der Abstand des V-förmigen Windverteilers zu den Turbinen verstellbar ist.

16. Wind- und/oder Wasserkraftanlage nach Anspruch 1,
**dadurch gekennzeichnet,**
**dass** eine Anordnung der erfindungsgemäßen Wind- und/oder Wasserkraftanlage entlang der Verkehrs-Infrastruktur wie Straßen, Autobahnen, Eisenbahnlinien, Kanälen vorgesehen ist, die zusätzlich der Telekommunikation und/oder der Zwischenspeicherung von Strom aus dem Netz in Zeiten schwacher Stromabnahme und/oder der Nutzung als Werbeträger und/oder als Straßenbeleuchtung und/oder zur Bereitstellung von Sicherheitsräumen dient.

17. Verwendung des Mastes und/oder des Windverteilers (3) der Wind- und/oder Wasserkraftanlage nach Anspruch 1 als Werbefläche oder Werbeträger sowie als Träger weiterer Netzwerk- und Kommunikationskomponenten.

18. Verwendung des Mastes und/oder des Windverteilers (3) der Wind- und/oder Wasserkraftanlage nach Anspruch 1 als Träger für urbane Infrastrukturmaßnahmen, insbesondere für Warnmelder, Überwachungskameras, Mobilfunkantennen, urbanes WLAN-Intranet, Anzeigetafeln, Verkehrsleiteinrichtungen, Breitband-Internetverbindung.

## Claims

1. Wind turbine and/or hydroelectric power station,
two interconnected radial flow turbines (1, 2), which are arranged next to one another and so as to be oriented in parallel and are pivotable about a pivot axis (15) in parallel with the turbine shafts (18), being arranged having a vertical axis of rotation, the pivot axis and a V-shaped wind distributor (3) being outside the line connecting the turbine axes and both being on the same side of the connecting line,
**characterised in that**
the upper and/or lower end of the turbines comprises a planar wind guide plate (303) having a chamfer (302) on the outer edges, the wind guide plate (303) being chamfered away from the turbines.

2. Wind turbine and/or hydroelectric power station according to claim 1,
**characterised in that**
the pivot axis (15) comprises a rotary connection and a lattice mast is provided above the rotary connection, to which mast an accumulator system and the control and current conversion device and the mount for the turbines can be attached.

3. Wind turbine and/or hydroelectric power station according to claim 1,
**characterised in that**
the two turbines rotate in opposite directions.

4. Wind turbine and/or hydroelectric power station according to claim 2,
**characterised in that**
the lattice mast holds the upper, lower and central bearing support of the turbines together with the V-shaped wind distributor and the upper and lower chamfered end surfaces.

5. Wind turbine and/or hydroelectric power station according to claim 2,
**characterised in that**
a slip ring which is integrated in the rotary connection is provided for transmitting the electrical power and the electronic signals from the rotatable part to the stationary connections.

6. Wind turbine and/or hydroelectric power station according to claim 1,
**characterised in that**
a ring generator is provided for generating current.

7. Wind turbine and/or hydroelectric power station according to claim 6,
**characterised in that**
the generator can be controlled in order to set the optimum tip speed ratio of the turbine.

8. Wind turbine and/or hydroelectric power station according to claim 2,
**characterised in that**
the wind turbine and/or hydroelectric power station is attached to a mast (5), a pontoon, a foundation, a building roof or the like by means of the rotary connection.

9. Wind turbine and/or hydroelectric power station according to claim 1,
**characterised in that**
a plurality of said wind turbines and/or hydroelectric power stations are installed on a mast one above the other and/or next to one another.

10. Wind turbine and/or hydroelectric power station according to claim 1,
**characterised in that**
outer guide surfaces (38, 39) are also arranged on the same side as the V-shaped wind distributor (3).

11. Wind turbine and/or hydroelectric power station according to claim 1,
**characterised in that**
a device is provided for automatically bringing the radial flow turbines closer together when a predetermined wind speed is reached.

12. Wind turbine and/or hydroelectric power station according to claim 1,
**characterised in that**
the radial flow turbines are divided into a plurality of individual turbines mounted individually along a shaft.

13. Wind turbine and/or hydroelectric power station according to claim 6,
**characterised in that**
the electrical energy generated is used in a number of ways, in particular by being converted into a mains-synchronous AC voltage and fed into the public supply network and/or by being temporarily stored in a local accumulator system and/or by using the accumulator system to temporarily store excess mains current.

14. Wind turbine and/or hydroelectric power station according to claim 1,
**characterised in that**
the edge of the V-shaped wind distributor (3) is rounded.

15. Wind turbine and/or hydroelectric power station according to claim 1,
**characterised in that**
the distance between the V-shaped wind distributor and the turbines is adjustable.

16. Wind turbine and/or hydroelectric power station according to claim 1,
**characterised in that**
an arrangement of the wind turbine and/or hydroelectric power station according to the invention is provided along transport infrastructure, such as roads, motorways, railways lines or canals, and is additionally used for telecommunication and/or for temporarily storing current from the mains in times of low current uptake and/or as an advertising medium and/or for street lighting and/or for providing safety spaces.

17. Use of the mast and/or the wind distributor (3) of the wind turbine and/or hydroelectric power station according to claim 1 as an advertising space or advertising medium and as a support for additional network and communication components.

18. Use of the mast and/or the wind distributor (3) of the wind turbine and/or hydroelectric power station according to claim 1 as a support for urban infrastructure measures, in particular for warning signs, CCTV cameras, mobile radio antennas, urban WLAN intranet, display boards, traffic control devices or broadband internet connection.

## Revendications

1. Éolienne et/ou installation hydroélectrique,
dans laquelle deux turbines radiales (1, 2) juxtaposées et orientées parallèlement sont disposées avec un axe de rotation vertical, qui sont raccordées l'une à l'autre et peuvent pivoter autour d'un axe de pivotement (15) parallèlement aux axes de turbine (18), dans laquelle l'axe de pivotement et un répartiteur de vent (3) en forme de V sont situés à l'extérieur de la ligne de raccordement des axes de turbine et les deux sont situés sur le même côté de la ligne de raccordement,
**caractérisées en ce que**
la terminaison supérieure et/ou inférieure des turbines présente une tôle de guidage de vent (303) plane avec une pliure (302) au niveau des arêtes extérieures, dans laquelle la tôle de guidage de vent (303) est repliée en s'éloignant des turbines.

2. Éolienne et/ou installation hydroélectrique selon la revendication 1,
**caractérisées en ce que**
l'axe de pivotement (15) présente un raccordement tournant et **en ce que**, au-dessus du raccordement tournant, il est prévu un mât en treillis sur lequel peuvent être fixés un système d'accumulateur et l'équipement de commande et de conversion de courant ainsi que la retenue pour les turbines.

3. Éolienne et/ou installation hydroélectrique selon la revendication 1,
**caractérisées en ce que**
les deux turbines tournent en sens contraire.

4. Éolienne et/ou installation hydroélectrique selon la revendication 2,
**caractérisées en ce que**
le mât en treillis retient la suspension de palier supérieure, inférieure et médiane des turbines conjointement avec le répartiteur de vent en forme de V ainsi que les surfaces de terminaison repliées supérieures et inférieures.

5. Éolienne et/ou installation hydroélectrique selon la revendication 2,
**caractérisées en ce**
**qu'**une bague collectrice intégrée dans le raccordement tournant est prévue pour la transmission de la puissance électrique et des signaux électroniques à partir de la partie tournante vers les connexions stationnaires.

6. Éolienne et/ou installation hydroélectrique selon la revendication 1,
**caractérisées en ce**
**qu'**il est prévu un générateur annulaire pour la production de courant.

7. Éolienne et/ou installation hydroélectrique selon la revendication 6,
**caractérisées en ce que**
le générateur peut être commandé pour le réglage du rapport optimal de vitesse de la turbine.

8. Éolienne et/ou installation hydroélectrique selon la revendication 2,
**caractérisées en ce que**
l'éolienne et/ou l'installation hydroélectrique sont, par le biais du raccordement tournant, fixées sur un mât (5), un ponton, une fondation, un toit de bâtiment ou similaire.

9. Éolienne et/ou installation hydroélectrique selon la revendication 1,
**caractérisées en ce que**
plusieurs de ces éoliennes et/ou installations hydroélectriques sont montées sur un mât de façon superposée et/ou juxtaposée.

10. Éolienne et/ou installation hydroélectrique selon la revendication 1,
**caractérisées en ce que**,
en plus, des surfaces de guidage extérieures (38, 39) sont disposées sur le même côté que le répartiteur de vent (3) en forme de V.

11. Éolienne et/ou installation hydroélectrique selon la revendication 1,
**caractérisées en ce**
**qu'**il est prévu un dispositif pour le rapprochement automatique des turbines radiales lorsqu'une vitesse de vent prédéfinie est atteinte.

12. Éolienne et/ou installation hydroélectrique selon la revendication 1,
**caractérisées en ce que**
les turbines radiales sont réparties en plusieurs turbines individuelles supportées individuellement le long d'un arbre.

13. Éolienne et/ou installation hydroélectrique selon la revendication 6,
**caractérisées en ce que**
l'énergie électrique produite est exploitée de multiples façons, en particulier par conversion en tension alternative synchronisée avec le réseau et par injection dans le réseau électrique public et/ou par stockage intermédiaire dans un système d'accumulateur local, et/ou par utilisation du système d'accumulateur pour le stockage intermédiaire de l'excès de courant du réseau.

14. Éolienne et/ou installation hydroélectrique selon la revendication 1,
**caractérisées en ce que**
l'arête du répartiteur de vent (3) en forme de V est arrondie.

15. Éolienne et/ou installation hydroélectrique selon la revendication 1,
**caractérisées en ce que**
la distance séparant le répartiteur de vent en forme de V et les turbines est réglable.

16. Éolienne et/ou installation hydroélectrique selon la revendication 1,
**caractérisées en ce**
**qu'**il est prévu un agencement de l'éolienne et/ou de l'installation hydroélectrique selon l'invention le long de l'infrastructure de transport telle que routes, autoroutes, lignes ferroviaires, canaux, qui sert en plus aux télécommunications et/ou au stockage intermédiaire de courant en provenance du réseau pendant les périodes de faible captage de courant et/ou à l'utilisation en tant que support publicitaire et/ou en tant qu'éclairage routier et/ou à la fourniture d'espaces de sécurité.

17. Utilisation du mât et/ou du répartiteur de vent (3) de l'éolienne et/ou de l'installation hydroélectrique selon la revendication 1 en tant que surface publicitaire ou support publicitaire ainsi qu'en tant que support d'autres composants de réseau et de communication.

18. Utilisation du mât et/ou du répartiteur de vent (3) de l'éolienne et/ou de l'installation hydroélectrique selon la revendication 1 en tant que support pour des mesures d'infrastructure urbaines, en particulier pour détecteurs, caméras de surveillance, antennes pour téléphones mobiles, intranet de réseau local sans fil en milieu urbain, tableaux d'affichage, dispositifs de gestion du trafic, connexion internet à haut débit.
